# FASCICULE DE BREVET EUROPEEN

(11) **EP 0 613 647 B1**
(45) Date de publication et mention de la délivrance du brevet: **14.01.1998**
(21) Numéro de dépôt: 94400445.6
(22) Date de dépôt: 02.03.1994
(51) Int. Cl.: A47J 36/02

(54) **Procédé pour fixer sur le fond d'un récipient culinaire, une grille ou plaque perforée**
Verfahren zur Befestigung einer gitterartigen oder perforierten Platte auf dem Boden eines Kochgeschirrs
Process of fixing a grid or a perforated disk to the bottom of a cooking vessel

(30) Priorité: 03.03.1993 FR 9302461
(43) Date de publication de la demande: 07.09.1994
(73) Titulaire: SEB S.A., 69130 Ecully (FR)
(72) Inventeur: Flammang, Denis, F-74150 Marcellas-Albanais (FR)
(74) Mandataire: Keib, Gérard

(56) Documents cités:
- EP-A- 0 509 860
- EP-A- 0 510 546
- EP-A- 0 515 705
- WO-A-87/04911
- DE-A- 1 440 973
- US-A- 3 495 735

## Description

La présente invention concerne un procédé pour fixer sur le fond d'un récipient culinaire tel qu'une poêle ou casserole, une grille ou plaque perforée, en vue d'améliorer les propriétés mécaniques dudit fond.

Un tel procédé est déjà décrit dans la demande de brevet français n^{o}91 03 695 au nom de la demanderesse.

Selon ce procédé, on fixe cette dernière par matriçage, en particulier par frappe à froid de façon à faire pénétrer le métal dudit fond dans les ouvertures de ladite grille ou plaque perforée.

Grâce à ce procédé, la plaque perforée ou grille est solidement encastrée dans le métal du fond du récipient culinaire.

La plaque perforée ou grille est de préférence en acier, tandis que le métal du récipient culinaire est de préférence en aluminium.

Du fait de l'encastrement de la plaque perforée ou grille en métal dur dans le métal relativement mou du récipient, on améliore considérablement la résistance mécanique du fond du récipient à l'égard des diverses contraintes mécaniques et thermiques qu'il est susceptible de subir.

Après matriçage de la grille ou de la plaque perforée dans le métal de fond du récipient, la surface plane dudit fond reçoit habituellement un revêtement en matière anti-adhésive, telle que de polytétrafluoréthylène (PTFE) ou un revêtement en émail.

Un tel revêtement, notamment lorsqu'il est un PTFE est relativement sensible aux ravures dues en particulier à l'utilisation d'outils coupants à lame tranchante.

On connaît dans la demande de brevet européen EP 0 515 705 un récipient de cuisson comportant un relief formé sur la face intérieure du fond. Mais aucune grille, ni plaque perforée n'est matricée dans le fond.

Le but de la présente invention est notamment de remédier aux inconvénients précités.

Suivant l'invention, le procédé pour fixer sur le fond d'un récipient culinaire une grille ou plaque perforée en métal dur, dans lequel on fixe cette dernière par matriçage, en particulier par frappe à froid de façon à faire pénétrer le métal dudit fond dans les ouvertures de ladite grille ou plaque perforée, est caractérisé en ce qu'après ou en même temps que l'opération de matriçage, on forme sur la surface de la grille ou plaque perforée ainsi que sur la surface du fond du récipient, une série de reliefs.

Des reliefs sont ainsi réalisés sur toute la surface du fond du récipient. Ces reliefs procurent au fond du récipient plusieurs effets techniques.

Tout d'abord ces reliefs augmentent la surface de contact entre le fond et le revêtement appliqué ultérieurement, ce qui améliore l'adhérence de ce dernier.

D'autre part, ces reliefs améliorent immédiatement la résistance du revêtement à l'égard des rayures du fait que le tranchant de la lame susceptible d'être appliquée sur le revêtement n'atteint que les sommets de reliefs, de sorte que les rayures au lieu d'être longues sont limitées à des points pratiquement invisibles.

De plus, le matriçage de reliefs sur la surface du fond qui présente la grille ou la plaque perforée améliore l'ancrage de cette dernière dans le métal dudit fond.

En outre, lorsque la plaque ou grille est en acier et le fond du récipient en aluminium, cette plaque ou grille confère à l'aluminium des propriétés d'élasticité dues à l'acier.

L'aluminium du fond du récipient ne présentant aucune élasticité, ce fond a tendance à se déformer d'une manière irréversible, ce qui présente l'inconvénient de diminuer considérablement la surface d'échange thermique entre le fond et une plaque de cuisson. Cette déformation irréversible est évitée grâce à l'élasticité du fond due à la présence de la grille ou plaque perforée en métal élastique.

D'autres particularités et avantages de l'invention apparaîtront encore dans la description ci-après.

Aux dessins annexés donnés à titre d'exemples non limitatifs:
- la figure 1 est un schéma en coupe du fond d'un récipient culinaire et d'une matrice utilisée pour matricer une plaque perforée sur le métal dudit fond;
- la figure 2 est un schéma analogue à la figure 1 montrant l'opération proprement dite de matriçage;
- la figure 3 est un schéma en coupe montrant les reliefs matricés sur la surface du fond du récipient recouverte d'une couche anti-adhésive;
- la figure 4 est une vue en plan partielle de la surface du fond obtenue après matriçage des reliefs;
- la figure 5 est une vue en plan partielle, à plus petite échelle de la surface du fond du récipient.

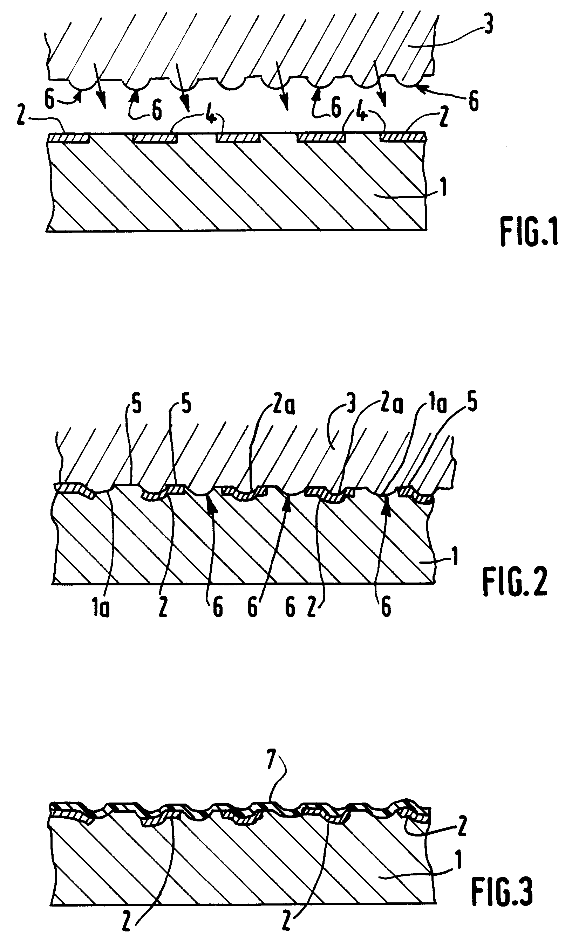

Comme illustré par les figures 1 et 2, dans le procédé pour fixer sur le fond 1 d'un récipient culinaire par exemple en aluminium, une grille ou plaque perforée 2 en métal dur tel que l'acier, on fixe cette dernière par matriçage, en particulier par frappe à froid au moyen d'une matrice 3, de façon à faire pénétrer le métal dudit fond 1 dans les ouvertures 4 de ladite grille ou plaque perforée 2.

Conformément à l'invention, après ou de préférence en même temps que l'opération de matriçage, on forme (voir figure 2) sur la surface 2a de la grille ou plaque perforée 2 ainsi que sur la surface 1a du fond 1 du récipient, une série de reliefs 5.

A cet effet, la matrice 3 servant à fixer la grille ou plaque perforée 2 présente sur sa surface une série de reliefs 6 complémentaires de ceux que l'on veut former sur la surface 1a du fond 1 du récipient.

Dans l'exemple représenté, les reliefs 5 sont formés sur la surface intérieure 1a du fond 1 du récipient.

Comme illustré sur la figure 3, la surface du fond 1 du récipient est recouverte ultérieurement d'une couche 7 de polymère anti-adhésif, tel que du PTFE.

La répartition et la forme des reliefs 5 sont telles que lorsque l'on déplace le tranchant d'une lame de couteau sur le revêtement anti-adhésif 7, ledit tranchant n'entre en contact qu'avec le sommet des reliefs 5. On évite ainsi la formation de rayures longues et visibles entraînant une rapide dégradation du revêtement anti-adhésif.

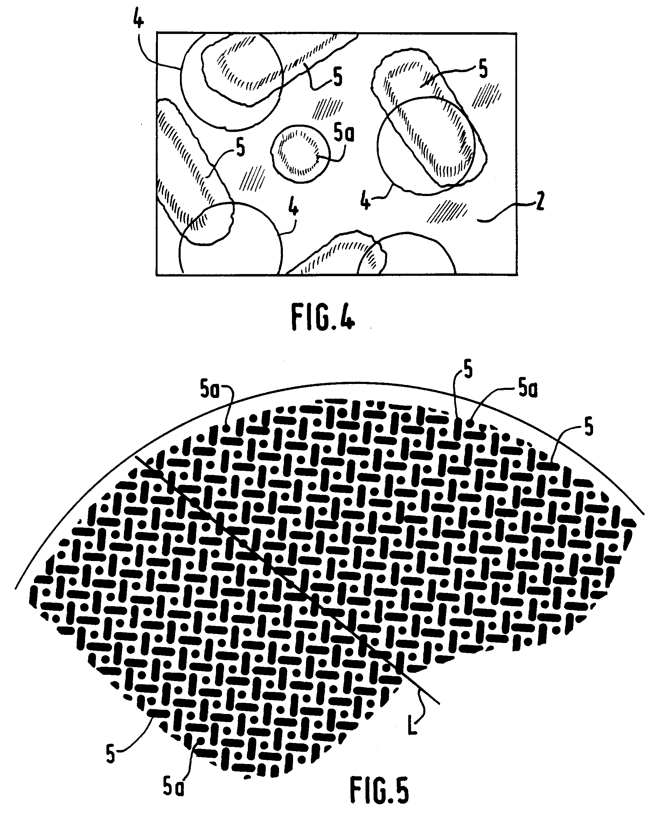

Dans l'exemple des figures 4 et 5, les reliefs 5 et 5a matricés sur la surface du fond du récipient, sont constitués par des reliefs allongés 5 qui encadrent des reliefs ponctuels 5a.

Les reliefs allongés 5, ont une longueur égale à 5-6 mm et une largeur égale à 2-3 mm.

Les reliefs ponctuels 5a ont un diamètre égal à 1-2 mm.

La distance comprise entre les reliefs 5, 5a ne dépasse pas 3 mm.

On constate que si on applique le tranchant d'une lame suivant une ligne quelconque L (voir figure 5) sur la surface du fond du récipient, le tranchant de la lame ne rencontrera que les sommets des reliefs 5, 5a. De ce fait, le tranchant de la lame ne pourra former aucune rayure continue sur la surface du fond, mais seulement des rayures ponctuelles invisibles et non susceptibles de dégrader le revêtement anti-adhésif 7.

Par ailleurs, les reliefs 5, 5a permettent de diminuer la surface de contact entre les aliments et le fond intérieur du récipient culinaire, ce qui permet de minimiser encore davantage les risques d'adhérence de ces aliments.

Sur la figure 4, on voit que les reliefs 5 sont formés non seulement sur les parties pleines de la plaque perforée 2, mais également sur la surface de l'aluminium qui apparaît dans les ouvertures 4 de la plaque perforée 2.

Grâce au matriçage des reliefs 5, 5a réalisé simultanément au matriçage de la plaque perforée dans le métal du fond du récipient, on améliore la continuité entre le métal du fond et la plaque perforée 2 notamment au niveau des ouvertures 4 de cette dernière.

Bien entendu, l'invention n'est pas limitée aux exemples de réalisation que l'on vient de décrire et on peut apporter à ceux-ci de nombreuses modifications sans sortir du cadre de l'invention.

Ainsi la forme des reliefs 5, 5a pourrait être différente de celle illustrée dans les dessins.

## Revendications

1. Procédé pour fixer sur le fond (1) d'un récipient culinaire une grille ou plaque perforée (2) en métal dur, dans lequel on fixe cette dernière par matriçage, en particulier par frappe à froid de façon à faire pénétrer le métal dudit fond (1) dans les ouvertures (4) de ladite grille ou plaque perforée (2), caractérisé en ce qu'après ou en même temps que l'opération de matriçage, on forme sur la surface de la grille ou plaque perforée (2) ainsi que sur la surface du fond (1) du récipient, une série de reliefs (5).

2. Procédé conforme à la revendication 1, caractérisé en ce que la matrice (3) servant à fixer la grille ou plaque perforée (2) présente sur sa surface une série de reliefs (6) complémentaires de ceux que l'on veut former sur le fond (1) du récipient.

3. Procédé conforme à l'une des revendications 1 ou 2, caractérisé en ce que les reliefs (5) sont formés sur la surface intérieure du fond (1) du récipient.

4. Procédé conforme à l'une des revendications 1 à 3, caractérisé en ce que la surface du fond (1) du récipient est recouverte d'une couche (7) de polymère anti-adhésif.

5. Procédé conforme à la revendication 4, caractérisé en ce que la répartition et la forme des reliefs (5, 5a) sont telles que lorsque l'on déplace le tranchant d'une lame de couteau sur le revêtement anti-adhésif (7), ledit tranchant n'entre en contact qu'avec le sommet des reliefs (5, 5a).

## Claims

1. A method of fixing on the base (1) of a cooking vessel a perforate plate or grid (2) of hard metal, wherein the latter is fixed by stamping, more particularly cold stamping, so as to cause the metal of the said base (1) to penetrate into the openings (4) in the said perforate plate or grid (2), characterised in that after or simultaneously with the stamping operation a series of raised portions (5) is formed on the surface of the perforate plate or grid (2) and on the surface of the base (1) of the vessel.

2. A method according to claim 1, characterised in that the die (3) used for fixing the perforate plate or grid (2) has on its surface a series of raised portions (6) complementary with those that it is required to form on the base (1) of the vessel.

3. A method according to claim 1 or 2, characterised in that the raised portions (5) are formed on the inner surface of the base (1) of the vessel.

4. A method according to any one of claims 1 to 3, charfacterised in that the surface of the base (1) of the vessel is covered by a layer (7) of non-stick polymer.

5. A method according to claim 4, characterised in that the distribution and shape of the raised portions (5, 5a) are such that when the cutting edge of a knife blade is moved over the non-stick coating (7) the said cutting edge comes into contact only with the top of the raised portions (5, 5a).

## Patentansprüche

1. Verfahren zum Befestigen einer gitterartigen oder perforierten Platte (2) am Boden (1) eines Kochgefäßes aus Hartmetall, in welchem diese Platte durch Pressen, insbesondere durch Kaltstauchen, festgelegt wird, so daß das Metall des Bodens (1) die Öffnungen (4) der gitterartigen oder perforierten Platte (2) durchdringt, dadurch gekennzeichnet, daß nach oder gleichzeitig mit dem Preßvorgang auf der Oberfläche der gitterartigen oder perforierten Platte (2) sowie auf der Oberfläche des Gefäßbodens (1) eine Reihe von Vorsprüngen (5) geformt werden.

2. Verfahren nach Anspruch 1, dadurch gekennzeichnet, daß die zur Befestigung der gitterartigen oder perforierten Platte (2) dienende Matrize (3) auf ihrer Oberfläche eine Reihe von den Vorsprüngen (6) aufweist, die zu den auf dem Gefäßboden (1) zu bildenden Vorsprüngen komplementär sind.

3. Verfahren nach einem der Ansprüche 1 oder 2, dadurch gekennzeichnet, daß die Vorsprünge (5) auf der Innenfläche des Gefäßbodens (1) gebildet sind.

4. Verfahren nach einem der Ansprüche 1 bis 3, dadurch gekennzeichnet, daß die Oberfläche des Gefäßbodens (1) mit einer Antihaft-Polymer-Beschichtung (7) versehen ist.

5. Verfahren nach Anspruch 4, dadurch gekennzeichnet, daß die Verteilung und die Form der Vorsprünge (5, 5a) derart sind, daß die Schneide einer Messerklinge lediglich mit den Spitzen der Vorsprünge (5, 5a) in Berührung kommt, wenn sie über die Antihaft-Beschichtung (7) bewegt wird.
